# EUROPÄISCHE PATENTSCHRIFT

(11) **EP 4 121 316 B1**
(45) Veröffentlichungstag und Bekanntmachung des Hinweises auf die Patenterteilung: **14.02.2024**
(21) Anmeldenummer: 21713910.4
(22) Anmeldetag: 17.03.2021
(51) Int. Cl.: B60L 5/00, B60L 13/03, B60L 53/30

(54) **ENERGIEÜBERTRAGUNG IN EINEM LINEAREN TRANSPORTSYSTEM**
ENERGY TRANSMISSION IN A LINEAR TRANSPORT SYSTEM
TRANSMISSION D'ÉNERGIE DANS UN SYSTÈME DE TRANSPORT LINÉAIRE

(30) Priorität: 20.03.2020 DE 102020107782
(43) Veröffentlichungstag der Anmeldung: 25.01.2023
(73) Patentinhaber: Beckhoff Automation GmbH, 33415 Verl (DE)
(72) Erfinder: PRÜSSMEIER, Uwe, 32657 Lemgo (DE); BRINKER, Andreas, 49082 Osnabrück (DE); STOCKEM, Dr. Irina, 33334 Gütersloh (DE); VORBOHLE, Thomas, 33397 Rietberg (DE)
(74) Vertreter: Patentanwaltskanzlei WILHELM & BECK
(86) Internationale Anmeldenummer: PCT/EP2021/056825
(87) Internationale Veröffentlichungsnummer: WO 2021/185910

(56) Entgegenhaltungen:
- EP-A1- 3 403 867
- DE-A1-102018 111 715
- US-B1- 6 499 701

## Beschreibung

Die Erfindung betrifft eine Energieübertragung in einem linearen Transportsystem. Die Erfindung umfasst insbesondere ein Verfahren zum Übertragen von Energie in einem linearen Transportsystem, eine Steuereinheit und ein Computerprogramm zur Ausführung des Verfahrens, ein maschinenlesbares Speichermedium mit einem Computerprogramm, eine stationäre Einheit eines linearen Transportsystems sowie das lineare Transportsystem.

Diese Anmeldung nimmt die Priorität der deutschen Patentanmeldung DE 10 2020 107 782.3 vom 20. März 2020 in Anspruch.

Aus dem Stand der Technik sind lineare Transportsysteme bekannt, bei denen eine bewegliche Einheit entlang einer Führungsschiene bewegt werden kann, und die einen Linearmotor zum Antreiben der beweglichen Einheit aufweisen, wobei der Linearmotor einen Stator und einen Läufer umfasst. Der Stator kann dabei zumindest ein entlang der Führungsschiene stationär angeordnetes Motormodul mit einer oder mehreren Antriebsspulen aufweisen, während die bewegliche Einheit am Schlitten angeordnet ist und einen oder mehrere Magnete aufweisen kann. Durch Bestromung der Antriebspulen kann eine Kraft auf die Magnete der beweglichen Einheit erzeugt werden, derart, dass sich die bewegliche Einheit entlang der Führungsschiene bewegt. Es kann ferner vorgesehen sein, dass die bewegliche Einheit beziehungsweise der Schlitten ein Werkzeug aufweist, wobei zum Betrieb des Werkzeugs Energie von der stationären Einheit zur beweglichen Einheit übertagen werden muss und Daten sowohl von der stationären Einheit zur beweglichen Einheit als auch von der beweglichen Einheit zur stationären Einheit übertragen werden können. Die deutsche Patentanmeldung DE 10 2018 111 715 A1 vom 16. Mai 2018 offenbart ein solches lineares Transportsystem mit einer Energieübertragung zwischen einem stationären Spulenmodul, also einer stationären Einheit, und einem beweglichen Schlitten, also einer beweglichen Einheit. Hierzu sind Energiesendespulen sowie Energieempfangsspulen für die Energieübertragung und erste Datenspulen beziehungsweise zweite Datenspulen für eine Datenübertragung vorgesehen.

Die Druckschrift EP 3 403 867 A1 offenbart ein Ladeportal an einem linearen Transportsystem.

Die Druckschrift US 6 499 701 B1 offenbart ein System zum induktiven Energieübertrag in einem linearen Transportsystem.

Eine Aufgabe der vorliegenden Erfindung ist es, ein verbessertes Verfahren zur Energieübertragung von einer stationären Einheit zu einer beweglichen Einheit eines linearen Transportsystems bereitzustellen. Eine weitere Aufgabe der Erfindung ist es, ein Steuergerät, mit dem die Durchführung des Verfahrens gesteuert werden kann, ein Computerprogramm zur Durchführung des Verfahrens sowie ein maschinenlesbares Speichermedium für das Computerprogramm bereitzustellen. Eine weitere Aufgabe der Erfindung ist es, eine stationäre Einheit eines linearen Transportsystems bereitzustellen, welches ausgestaltet ist, die Energieübertragung gemäß dem erfindungsgemäßen Verfahren zu übernehmen, sowie die Bereitstellung eines linearen Transportsystems, bei dem eine solche Energieübertragung möglich ist.

Diese Aufgaben werden mit dem Verfahren, der Steuereinheit, dem Computerprogramm, dem maschinenlesbaren Speichermedium, der stationären Einheit sowie dem linearen Transportsystem der unabhängigen Patentansprüche gelöst. Vorteilhafte Ausgestaltungen sind den abhängigen Patentansprüchen angegeben.

Ein lineares Transportsystem umfasst eine Führungsschiene zum Führen einer beweglichen Einheit, mehrere stationäre Einheiten, eine Steuereinheit, sowie einen Linearmotor zum Antreiben der beweglichen Einheit entlang der Führungsschiene. Der Linearmotor weist einen Stator und einen Läufer auf, wobei der Stator die stationären Einheiten umfasst. Die stationären Einheiten weisen jeweils eine oder mehrere Antriebsspulen auf. Der Läufer ist an der beweglichen Einheit angeordnet und umfasst einen oder mehrere Magnete. Werden die Antriebsspulen der stationären Einheiten bestromt, kann dadurch eine magnetische Kraft auf die Magnete des Läufers ausgeübt werden und somit der Läufer und damit die bewegliche Einheit entlang der Führungsschiene bewegt werden. Die stationären Einheiten umfassen jeweils eine oder mehrere Energiesendespulen, die bewegliche Einheit umfasst mindestens eine Energieempfangsspule.

In einem Verfahren zum Übertragen von Energie von einer stationären Einheit des linearen Transportsystems zu einer beweglichen Einheit des linearen Transportsystems werden die folgenden Schritte von der Steuereinheit ausgeführt: Zunächst werden Positionsdaten der Energieempfangsspule der beweglichen Einheit ermittelt. Anschließend wird anhand der Positionsdaten der Energieempfangsspule mindestens eine Energiesendespule innerhalb des linearen Transportsystems ausgewählt. Anschließend wird ein Steuersignal an die stationäre Einheit ausgegeben, die die mindestens eine Energiesendespule umfasst, wobei das Steuersignal eine Identifikationsinformation, mit der die mindestens eine Energiesendespule identifiziert werden kann, umfasst. Das Steuersignal umfasst ferner eine Energiemengeninformation, wobei die Energiemengeninformation eine Energiemenge, die übertragen werden soll, umfasst. Die Energiemenge umfasst zu einem ersten Zeitpunkt eine Belastungsenergiemenge und zu einem zweiten Zeitpunkt eine Leerlaufenergiemenge. Die Belastungsenergiemenge ist zum Betrieb eines auf der beweglichen Einheit angeordneten Werkzeugs ausreichend. Die Leerlaufenergiemenge ist zur Aufrechterhaltung einer Energieversorgung einer Kommunikationseinheit der beweglichen Einheit ausreichend, jedoch nicht dazu, das Werkzeug zusätzlich eine Aktion ausführen zu lassen.

Innerhalb des linearen Transportsystems können mehrere stationäre Einheiten angeordnet sein, die jeweils eine oder mehrere Energiesendespulen aufweisen können. Durch die Auswahl einer der Energiesendespulen innerhalb des linearen Transportsystems anhand der Positionsdaten der beweglichen Einheit kann erreicht werden, dass nur diejenige Energiesendespule oder diejenigen Energiesendespulen bestromt wird oder werden, mit denen eine effiziente Energieübertragung auf die bewegliche Einheit aktuell möglich ist. Im Regelfall werden dies die der beweglichen Einheit am nächsten liegenden Energiesendespulen sein. Weitere von der beweglichen Einheit entfernt liegende Energiesendespulen, die also für eine Energieübertragung nicht benötigt werden, können weniger beziehungsweise überhaupt nicht bestromt werden, sodass insgesamt eine Energieeinsparung möglich ist.. Durch die Energiemengeninformation wird eine Steuerung beziehungsweise eine Regelung der zu übertragenden Energiemenge ermöglicht. Es ist vorgesehen, dass die bewegliche Einheit ein Werkzeug umfasst, welches zum Betrieb Energie benötigt. Wird mittels der Kommunikationseinheit deutlich, dass das Werkzeug eine Aktion ausführen soll und aus diesem Grund die Belastungsenergiemenge notwendig ist, kann die Energiesendespule derart bestromt werden, dass die Belastungsenergiemenge übertragen wird. Soll das Werkzeug keine Aktion ausführen, kann die Leerlaufenergiemenge übertragen werden, die ausreichend ist, eine Kommunikation zwischen der beweglichen Einheit und der stationären Einheit aufrechtzuerhalten, beispielsweise mittels Funkübertragung, die jedoch nicht dazu ausreicht, das Werkzeug zusätzlich eine Aktion ausführen zu lassen. Dadurch kann eine weitere Energieeinsparung ermöglicht werden, wenn die Energieübertragung zur beweglichen Einheit nur dann derart gesteuert wird, dass die Belastungsenergiemenge übertragen wird, wenn aktuell eine entsprechende Aktion des Werkzeugs, die die entsprechende Energiemenge benötigt, durchgeführt wird.

Dabei kann vorgesehen sein, eine Energiemenge und/oder eine Leistung und/oder eine Stromstärke einer Bestromung der ausgewählten Energiesendespule einzustellen, wobei die Energiemenge und/oder die Leistung und/oder die Stromstärke während einer Initialisierung eingestellt wird.

Es kann vorgesehen sein, dass die Durchführung des Verfahrens von einer zentralen Steuereinheit des linearen Transportsystems gesteuert wird, da innerhalb dieser zentralen Steuereinheit die Positionsdaten der beweglichen Einheit sowieso erfasst werden, um anhand der Positionsdaten eine Bestromung der Antriebsspulen zu steuern. Insbesondere kann dies erfolgen, wenn das lineare Transportsystem mehr als eine bewegliche Einheit auf der Führungsschiene aufweist. Die Steuereinheit gibt dann das Steuersignal an diejenige stationäre Einheit aus, der die Energiesendespule, die ausgewählt wurde, um die Energieübertragung durchzuführen, zugeordnet ist. Die entsprechende stationäre Einheit ist eingerichtet, das Steuersignal zu empfangen und die Energiesendespule, die anhand der Identifikationsinformation identifiziert werden kann, auszuwählen. Ferner ist die stationäre Einheit eingerichtet, die ausgewählte Energiesendespule anhand der Energiemengeninformation zu bestromen.

Ein erfindungsgemäßes, lineares Transportsystem umfasst die erfindungsgemäße Steuereinheit, die erfindungsgemäße stationäre Einheit und mindestens eine bewegliche Einheit mit mindestens einem Läufer und mit einer Energieempfangsspule, wobei die bewegliche Einheit ein auf ihr angeordnetes Werkzeug und eine Kommunikationseinheit umfasst.

In einer Ausführungsform des Verfahrens umfasst die Energiemengeninformation eine Amplitude und/oder eine Frequenz einer Wechselspannung oder eines Wechselstroms. Wird die Energiesendespule mit einer Wechselspannung oder einem Wechselstrom einer höheren Amplitude bestromt, kann mehr Energie übertragen werden. Gleiches gilt, wenn die Energiesendespule mit einer Wechselspannung oder einem Wechselstrom einer höheren Frequenz bestromt wird. Die Energiesendespulen, die aktuell nicht zur Energieübertragung verwendet werden sollen, können dann beispielsweise mit einer Amplitude nahe Null beziehungsweise Null bestromt werden. Mittels Amplitude und/oder Frequenz einer Wechselspannung bzw. eines Wechselstroms lassen sich benötigte Energiemengen leicht einstellen beziehungsweise steuern.

Sollten mehrere bewegliche Einheiten vorgesehen sein, können unterschiedliche Energiesendespulen auch mit unterschiedlichen Wechselspannungen beziehungsweise Wechselströmen bestromt werden, um unterschiedliche Energiemengen zu übertragen. Dabei kann vorgesehen sein, Amplituden und/oder Frequenzen der unterschiedlichen Wechselspannungen beziehungsweise Wechselströmen unterschiedlich einzustellen.

In einer Ausführungsform des Verfahrens werden die Positionsdaten anhand einer Messung zumindest eines Positionssensors ermittelt und/oder anhand einer Bestromung des Linearmotors ermittelt. Durch die Bestromung des Linearmotors ist eine Bewegung einer beweglichen Einheit entlang der Führungsschiene in gewissem Maße nachvollziehbar, da gewisse Bestromungen zu einer gewissen Bewegung der beweglichen Einheit führen. Dies kann bereits ausreichend sein, um die Positionsdaten, anhand derer die Energiesendespule ausgewählt werden soll, hinreichend genau zu bestimmen. Dabei kann es vorgesehen sein, die Bestromung aus Steuerdaten zu entnehmen und/oder mittels eines Sensors zu messen. Alternativ oder zusätzlich kann aber auch eine Positionsdatenbestimmung mittels einer Messung zumindest eines Positionssensors erfolgen, wobei typischerweise mittels Magnetfeldsensoren der stationären Einheit ein Magnetfeld eines an der beweglichen Einheit angeordneten Positionsmagneten ermittelt wird. Der Positionsmagnet kann dabei Teil der Magnete des Läufers sein.

In einer Ausführungsform wird für den Fall, dass die Positionsdaten ergeben, dass die Energiemenge mittels mehrerer Energiesendespulen übertragen werden soll, wobei die Energiesendespulen entlang der Führungsschiene hintereinander angeordnet sind, die Energiemengeninformation anhand einer Fläche eines Zwischenraums zwischen den Energiesendespulen und einer Fläche der Energieempfangsspule angepasst. Die Anpassung anhand der Fläche kann auch anhand von Abmessungen der Energiesendespule und des Zwischenraums erfolgen. Zwischen den Energiesendespulen, beispielsweise zwischen zwei Energiesendespulen einer stationären Einheit oder jeweils einer Energiesendespule zweiter stationärer Einheiten ist ein Zwischenraum vorgesehen, der flächenmäßig klein gegenüber den Energiesendespulen ist. Dies kann beispielsweise dadurch erreicht werden, dass der Zwischenraum eine kleinere Breite als eine Länge der Energieempfangsspule, jeweils in Bewegungsrichtung der beweglichen Einheit, aufweist. Bewegt sich nun die bewegliche Einheit mit der Energieempfangsspule über diesen Zwischenraum, so kann im Bereich des Zwischenraums keine Energie übertragen werden. Beträgt die Fläche des Zwischenraums beispielsweise 10 % der Fläche der Energieempfangsspule, so kann vorgesehen sein, die mittels Bestromung der Energiesendespulen übertragene Energie um 10 % zu erhöhen, um den Bereich des Zwischenraums entsprechend auszugleichen und somit eine kontinuierliche Energieübertragung bereitzustellen, wenn sich die bewegliche Einheit entlang der Führungsschiene von einer Energiesendespule zu einer weiteren Energiesendespule bewegt. Die Bestromung kann beispielsweise in Amplitude und/oder Frequenz erhöht werden, wobei die Erhöhung nicht zwingend proportional zur überdeckenden Fläche sein muss. Es kann auch ein anderer funktioneller Zusammenhang gewählt werden, mit dem eine konstante Leistung (bzw. über die Zeit eine konstante Energie) übertragen werden kann.

In einer Ausführungsform wird eine Phaseninformation ausgegeben, wobei die Phaseninformation dazu dient, eine Phase des Wechselstroms der mehreren Energiesendespulen einzustellen und dadurch zu erreichen, dass die Energiesendespulen phasengleich bestromt werden.

In einer Ausführungsform des Verfahrens wird ein Energiemengenistsignal der beweglichen Einheit ausgewertet und die Energiemenge anhand des Energiemengenistsignals geregelt. Das Energiemengenistsignal kann dabei ein von der beweglichen Einheit zur stationären Einheit beziehungsweise zur Steuereinheit übertragenes derartiges Signal sein, welches umfasst, ob die derzeit durchgeführte Aktion des Werkzeugs der beweglichen Einheit eine höhere beziehungsweise niedrigere Energiemenge benötigt. Über eine Regelschleife kann die mittels der Energiesendespule übertragene Energie angepasst werden. Die Regelschleife kann dabei innerhalb der stationären Einheit angeordnet sein, wobei in diesem Fall ein Energiemengensteuergerät der stationären Einheit anhand der Energiemengeninformation und des Energiemengenistsignals eine Regelung der über die Energiesendespule bereitgestellten Energie durchführt. Alternativ kann der Regelkreis derart ausgestaltet sein, dass das Energiemengenistsignal von der stationären Einheit zur Steuereinheit oder von der beweglichen Einheit direkt zur Steuereinheit übertragen wird. In diesem Fall kann der Regelkreis beinhalten, dass mittels des Steuergeräts die Energiemengeninformation des Steuersignals entsprechend angepasst wird. Die Energiemengeninformation kann dabei eine übertragene Energiemenge, ein Stromistwert oder eine übertragene Leistung umfassen.

Die Erfindung umfasst eine Steuereinheit, die eingerichtet ist, das erfindungsgemäße Verfahren durchzuführen. Die Erfindung umfasst ferner ein Computerprogramm, umfassend Programmcode, welcher ausgeführt auf einem Computer diesen dazu veranlasst, das erfindungsgemäße Verfahren durchzuführen. Die Erfindung umfasst ferner ein maschinenlesbares Speichermedium, welches das Computerprogramm umfasst.

Eine stationäre Einheit eines linearen Transportsystems weist einen Stator mit einer oder mehreren Antriebsspulen zum Antrieb eines Läufers auf. Die stationäre Einheit umfasst ferner mindestens eine Energiesendespule und ist eingerichtet, ein Steuersignal zu empfangen. Das Steuersignal umfasst dabei eine Identifikationsinformation, mit der mindestens eine Energiesendespule identifiziert werden kann, und eine Energiemengeninformation, die die Energiemenge, die übertragen werden soll, umfasst. Die stationäre Einheit ist eingerichtet, anhand der Identifikationsinformation eine oder mehrere Energiesendespulen auszuwählen und einen Energieübertrag der einen oder mehreren Energiesendespulen anhand der Energiemengeninformation einzustellen.

In einer Ausführungsform weist die stationäre Einheit eine Regelschleife auf, mittels derer ein Energiemengenistsignal ausgewertet und zum Einstellen des Energieübertrags verwendet wird.

Gemäß der Erfindung weist die stationäre Einheit ferner einen Stator (bspw. in From einer Führungsschiene) und eine oder mehrere Antriebsspulen zum Antreiben einer beweglichen Einheit auf.

Ein lineares Transportsystem weist eine erfindungsgemäße Steuereinheit, zumindest eine erfindungsgemäße stationäre Einheit und zumindest eine bewegliche Einheit auf. Die bewegliche Einheit weist eine Energieempfangsspule auf. Ein Läufer ist an der beweglichen Einheit angeordnet und umfasst einen oder mehrere Magnete. Der Stator und der Läufer bilden einen Linearantrieb. In einem solchen linearen Transportsystem kann selektiv eine vorgegebene Energiemenge auf die bewegliche Einheit übertragen werden und dabei Energie eingespart werden, indem diejenigen Energiesendespulen, die zum aktuellen Zeitpunkt nur ineffizient Energie auf die bewegliche Einheit übertragen könnten, entsprechend nicht bestromt werden.

Die Erfindung wird nachfolgend anhand von Ausführungsbeispielen und unter Bezugnahme auf Figuren näher erläutert. Dabei zeigen in jeweils schematischer Darstellung
- Fig. 1: ein lineares Transportsystem;
- Fig. 2: einen Ausschnitt aus dem linearen Transportsystem der Fig. 1;
- Fig. 3: eine seitliche Draufsicht auf den Ausschnitt des linearen Transportsystem der Fig. 2;
- Fig. 4: ein erstes Beispiel eines Spulenpaars zur Energieübertragung;
- Fig. 5: ein zweites Spulenpaar zur Energieübertragung;
- Fig. 6: ein drittes Spulenpaar zum Energieübertrag;
- Fig. 7: eine Spulenanordnung; und
- Fig. 8: ein elektrisches Schaltbild einer stationären Einheit und einer beweglichen Einheit.

Im Folgenden können für gleiche Merkmale gleiche Bezugszeichen verwendet werden. Weiter kann es aus Gründen der Übersichtlichkeit vorgesehen sein, dass nicht jeder Figur sämtliche Elemente gezeigt sind. Weiter kann es der Übersicht halber vorgesehen sein, dass nicht in jeder Zeichnung jedes Element mit einem eigenen Bezugszeichen versehen ist.

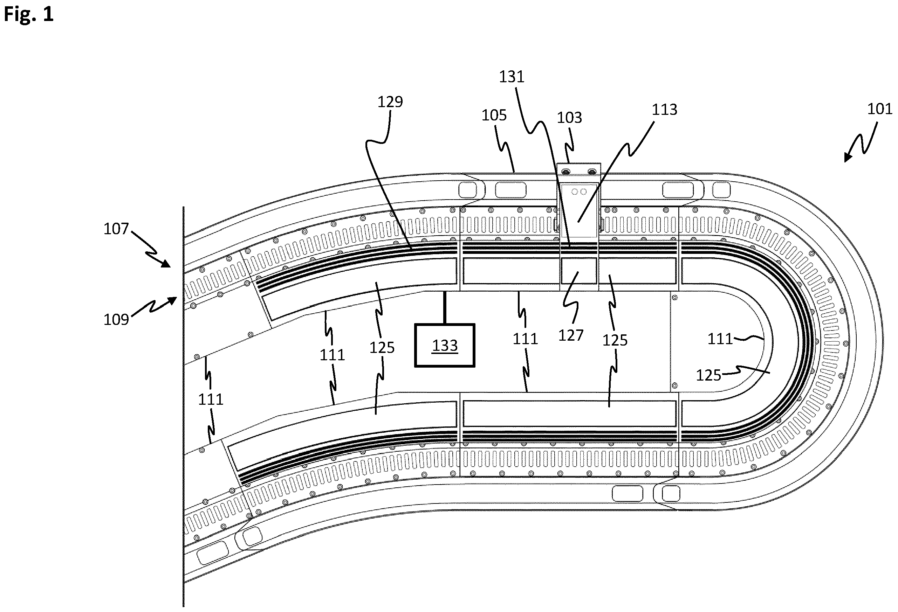

Fig. 1 zeigt ein lineares Transportsystem 101. Das lineare Transportsystem 101 umfasst eine bewegliche Einheit 103, die durch eine Führungsschiene 105 geführt ist. Die bewegliche Einheit 103 umfasst hier nicht dargestellte Laufrollen und einen Läufer 113 mit Magneten. Die Laufrollen der beweglichen Einheit 103 können dabei auf Laufflächen der Führungsschiene 105 rollen.

Das lineare Transportsystem 101 umfasst ferner einen Linearmotor 107, wobei der Linearmotor 107 einen Stator 109 aufweist. Der Stator 109 des Linearmotors 107 ist in den stationäre Einheiten 111 angeordnet, die hierzu jeweils mehrere Antriebsspulen aufweisen. Dabei sind die stationären Einheiten 111 in Fig. 1 teilweise unterschiedlich ausgestaltet, wobei einzelne stationäre Einheiten 111 gerade oder gebogen sein können. Der Linearmotor 107 umfasst ferner den Läufer 113, der an der beweglichen Einheit 103 angeordnet ist und einen oder mehrere Magnete umfasst. Die stationären Einheiten 111 umfassen jeweils eine Energiesendespule 125. Die bewegliche Einheit 103 umfasst eine Energieempfangsspule 127. In einer in Fig. 1 nicht dargestellten alternativen Ausführungsform kann eine stationäre Einheit 111 auch mehrere Energiesendespulen 125 umfassen.

Die stationären Einheiten 111 umfassen ferner optionale stationäre Antennen 129. Die bewegliche Einheit 103 umfasst eine optionale bewegliche Antenne 131. Die bewegliche Antenne 131 ist an der beweglichen Einheit 103 fixiert, kann sich jedoch zusammen mit der beweglichen Einheit 103 entlang der Führungsschiene 105 bewegen. Mittels der stationären Antennen 129 und der beweglichen Antenne 131 können Daten zwischen den stationären Einheiten 111 und der beweglichen Einheit 103 ausgetauscht werden. Alternativ kann eine solche Datenübertragung jedoch auch beispielsweise mittels einer Wireless-LAN- oder einer Bluetooth- oder einer Infrarot-Verbindung oder einer 5G-Verbindung oder nach dem DECT-Standard oder als optische Übertragung ausgestaltet sein. Die stationäre Einheit 111 umfasst dann nicht die stationäre Antenne 129. Die bewegliche Einheit 103 umfasst dann nicht die bewegliche Antenne 131, jeweils wie in Fig. 1 gezeigt. Es können jedoch andere Antennen an der beweglichen Einheit 103 angeordnet sein. Die stationären Antennen und/oder die beweglichen Antennen können völlig unabhängig von der in Fig. 1 gezeigten Ausgestaltung angeordnet sein.

Das lineare Transportsystem 101 umfasst ferner eine Steuereinheit 133, die entweder mit einer der stationären Einheiten 111 oder mit allen stationären Einheiten 111 direkt verbunden ist. Dargestellt in Fig. 1 ist eine Verbindung zu einer der stationären Einheiten 111. In diesem Fall kann es vorgesehen sein, dass die stationären Einheiten 111 einen Kommunikationsbus umfassen, mit dem Signale von der Steuereinheit 133 zwischen den stationären Einheiten 111 ausgetauscht werden können. Ferner können weitere, in Fig. 1 nicht gezeigte, Kommunikationseinheiten zwischen der Steuerung 133 und der oder den stationären Einheit oder Einheiten angeordnet sein.

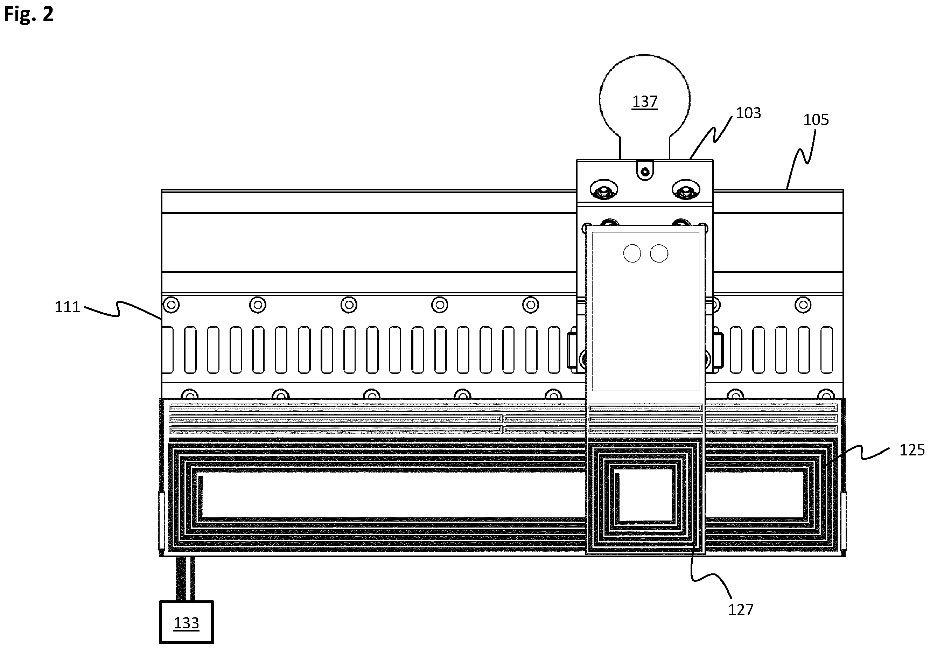

Fig. 2 zeigt eine detailliertere Ansicht einer stationären Einheit 111, an der eine bewegliche Einheit 103 angeordnet ist. Die bewegliche Einheit 103 umfasst ein Werkzeug 137, welches beispielsweise als elektrisches Werkzeug ausgestaltet sein kann. Um das Werkzeug 137 betreiben zu können, ist eine Energieübertragung von der stationären Einheit 111 zur beweglichen Einheit 103 notwendig. Dies kann über die Energiesendespule 125 der stationären Einheit 111 und die Energieempfangsspule 127 der beweglichen Einheit 103 erfolgen. Wird die Energiesendespule 125 bestromt, beispielsweise mit einem Wechselstrom, wird ein entsprechendes Magnetfeld erzeugt, welches in der Energieempfangsspule 127 eine Spannung induziert. Diese induzierte Spannung kann dann verwendet werden, um das Werkzeug 137 der beweglichen Einheit 103 mit Energie zu versorgen.

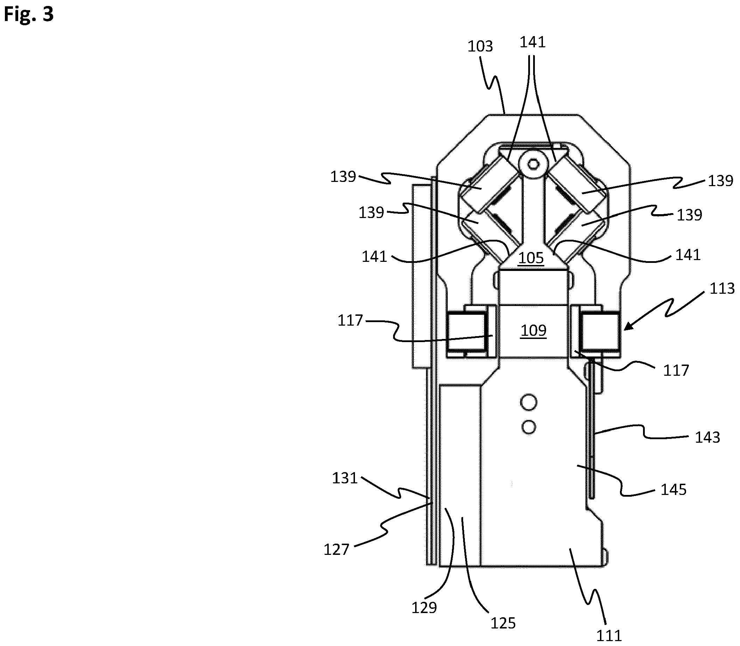

Fig. 3 zeigt eine seitliche Draufsicht auf eine stationäre Einheit 111 inklusive Führungsschiene 105, an der eine bewegliche Einheit 103 angeordnet ist. Die Führung der beweglichen Einheit 103 kann auch mittels alternativen, nicht gezeigten Ausgestaltungen erfolgen. Laufrollen 139 der beweglichen Einheit 103 können auf Laufflächen 141 der Führungsschiene 105 abrollen und so eine im Wesentlichen eindimensionale Bewegung der beweglichen Einheit 103 entlang der Führungsschiene 105 ermöglichen. Ebenfalls in Fig. 3 dargestellt sind Magnete 117 der beweglichen Einheit 103, die den Läufer 113 des Linearmotors 107 bilden. Zusätzlich dargestellt ist der Stator 109 des Linearmotors 107, der aus nicht dargestellten Statorzähnen und Antriebsspulen gebildet wird. Unterhalb der Magnete 117 und des Stators 109 weist die bewegliche Einheit 103 ein Positionsdetektionselement 143 auf. Die stationäre Einheit 111 weist in diesem Bereich einen Positionssensor 145 auf. Der Positionssensor 145 kann beispielsweise ein durch ein im Positionsdetektionselement 143 eingebettetes Metallstück verändertes Induktionsverhalten einer Spule messen. Hierzu kann der Positionssensor 145 beispielsweise eine bestromte Spule aufweisen, bei der durch eine veränderte Induktivität ein Vorbeifahren des Positionsdetektionselements 143 zu einer Veränderung des Stromes in der Spule führt und so die Position des Positionsdetektionselements 143 und damit der beweglichen Einheit 103 detektiert werden kann. Selbstverständlich kann der Positionssensor 145 jedoch auch anders ausgestaltet sein, beispielsweise mit jeweils einer Erreger- und Empfangsspule, mit der ebenfalls eine Induktivität des in das Positionsdetektionselement 143 eingebetteten Metallstücks gemessen wird. Ferner sind beispielsweise noch in das Positionsdetektionselement 143 eingebettete Magnete 117 oder eine Lichtschrankenauswertung zur Positionsbestimmung möglich.

Eine Stromversorgung von beweglicher Antenne 131 sowie Werkzeug 137 kann über die in den Fig. 1 bis 3 gezeigte Energiesendespule 125 beziehungsweise Energieempfangsspule 127 erfolgen. Es kann vorgesehen sein, dass die bewegliche Einheit 103 einen Energiespeicher aufweist, wobei der Energiespeicher als Kondensator, Akkumulator, Supercap bzw. Superkondensator, supraleitender magnetischer Energiespeicher oder als Schwungrad ausgestaltet sein kann. Dadurch kann Energie gespeichert werden, beispielsweise um für Aktionen des Werkzeugs 137, die kurzfristig eine höhere Leistung benötigen, als mittels der Energiesendespule 125 bereitgestellt werden kann, eine größere Energiemenge längerfristig vorab zu übertragen. Außerdem kann so Energie gespeichert werden um größere Bereiche ohne Energieübertragung zu überbrücken und dort trotzdem eine Kommunikation mittels der beweglichen Antenne 131 aufrecht erhalten zu können oder um eine Aktion des Werkzeugs 137 dort auszuführen.

In einem Verfahren zum Übertragen von Energie von der stationären Einheit 111 zur beweglichen Einheit 103 des linearen Transportsystems 101 können von der Steuereinheit 133 folgende Schritte durchgeführt werden: Zunächst werden die Positionsdaten der beweglichen Einheit 103 ermittelt. Diese Positionsdaten können eine Position der beweglichen Einheit 103 relativ zu den stationären Einheiten 111 des linearen Transportsystems 101 umfassen. Dabei kann es vorgesehen sein, die Positionsdaten mittels des Positionssensors 145 zu ermitteln. Anschließend wird mindestens eine der Energiesendespulen 125 ausgewählt. Die Auswahl erfolgt anhand der Positionsdaten. Es kann dabei vorgesehen sein, die Energiesendespule 125 derart auszuwählen, dass die ausgewählten Energiesendespule 125 die Energieempfangsspule 127 zumindest teilweise, insbesondere vollständig gegenüberliegt. Die Auswahl kann dabei sowohl die Auswahl der stationären Einheit 111 als auch, wenn die stationäre Einheit 111 mehrere Energiesendespulen 125 umfasst, die Auswahl der Energiesendespule 125 innerhalb der stationären Einheit 111 umfassen. Es kann vorgesehen sein, dass bei stationären Einheiten 111, welche über eine Mehrzahl von individuell steuerbaren Energiesendespulen 125 verfügen, auch eine Mehrzahl der Energiesendespulen 125 für die Energieübertragung ausgewählt werden. Ferner kann es vorgesehen sein, wenn die bewegliche Einheit 103 gerade an einem Übergang zwischen zwei Energiesendespulen 125 angeordnet ist, beide Energiesendespulen 125 auszuwählen.

Die Auswahl der Energiesendespulen 125 kann auch so gestaltet werden, dass entweder eine gute Übertragung gewährleistet ist oder dass gezielt eine schlechtere Energieübertragung auswählt wird, wobei dadurch die zu übertragende Energie gesteuert werden kann.

Nach der Auswahl der mindestens einen Energiesendespule 125 innerhalb des linearen Transportsystems 101 anhand der Positionsdaten wird von der Steuereinheit 133 ein Steuersignal ausgegeben, welches eine Identifikationsinformation. Mittels der Identifikationsinformation kann die mindestens eine Energiesendespule 125 identifiziert werden.

In einem Ausführungsbeispiel umfasst das Steuersignal eine Energiemengeninformation. Die Energiemengeninformation umfasst die Energiemenge, die übertragen werden soll. Dieses Steuersignal wird von der Steuereinheit 133 an die entsprechende stationäre Einheit 111 ausgegeben. Innerhalb der stationären Einheit 111 kann dann die Energiesendespule 125 derart bestromt werden, dass die durch die Energiemengeninformation definierte Energiemenge auf die bewegliche Einheit 103 übertragen wird. Die zu übertragende Energiemenge kann dabei auch durch die benötigte Leistung umfassen.

Es kann vorgesehen sein, dass die Energiemengeninformation eine Amplitude und/oder eine Frequenz einer Wechselspannung oder eines Wechselstroms umfasst. Sowohl mittels einer Amplitude als auch mittels einer Frequenz einer Wechselspannung/eines Wechselstroms lässt sich eine über die Energiesendespule 125 zur Energieempfangsspule 127 übertragene Energie und/oder Leistung einstellen.

Es kann vorgesehen sein, dass die stationäre Einheit 111 die Frequenz und/oder die Amplitude selbstständig auswählt, beispielsweise mittels einer entsprechenden Tabelle. Dadurch kann die zu übertragende Energiemenge optimal übertragen werden. Hierzu kann es evtl. sinnvoll sein, die Positionsdaten und optional zusätzlich eine Abmessung der beweglichen Einheit 103 der stationären Einheit 111 mitzuteilen.

In einem Ausführungsbeispiel umfasst die Energiemenge zu einem ersten Zeitpunkt eine Belastungsenergiemenge und zu einem zweiten Zeitpunkt eine Leerlaufenergiemenge. Die Belastungsenergiemenge ist zum Betrieb des auf der beweglichen Einheit 103 angeordneten Werkzeugs 137 ausreichend. Die Leerlaufenergiemenge ist ausreichend, um eine Energieversorgung einer Kommunikationseinheit der beweglichen Einheit 103 aufrechtzuerhalten. Dies bedeutet, dass wenn sich die bewegliche Einheit 103 an einem Punkt befindet, an dem eine Aktion des Werkzeugs 137 erforderlich ist, eine höhere Energiemenge, nämlich die Energiemenge, die zum Betrieb des Werkzeugs 137 benötigt wird, übertragen wird. An anderen Stellen kann es vorgesehen sein, nur eine Energiemenge zu übertragen, die maximal ausreicht, um eine Kommunikation über die stationären Antennen 129 und die bewegliche Antenne 131 aufrechtzuerhalten.

In einem Ausführungsbeispiel werden die Positionsdaten anhand einer Messung zumindest eines Positionssensors 145 ermittelt. In einem weiteren Ausführungsbeispiel werden die Positionsdaten anhand einer Bestromung des Linearmotors 107 ermittelt. Beide Möglichkeiten können ausreichend sein, um eine Position der beweglichen Einheit 103 relativ zu den stationären Einheiten 111 hinreichend genau zu bestimmen, um die Energiesendespule 125 auszuwählen. Eine weitere Möglichkeit der Ermittlung der Positionsdaten besteht darin, mittels eines Magnetfeldsensors, beispielsweise eines (3D-)HallSensors eine Position eines oder mehrerer Magnete 117 der beweglichen Einheit zu messen.

Es kann vorgesehen sein, neben der Energieübertragung von den Energiesendespulen 125 zu den Energieempfangsspulen 127 in bestimmten Situationen ebenfalls eine Energieübertragung in die entgegengesetzte Richtung vorzusehen. Dies kann beispielsweise dann erfolgen, wenn mehr Energie als benötigt auf die bewegliche Einheit 103 übertragen wurde, insbesondere, wenn die bewegliche Einheit 103 einen Energiespeicher wie oben beschrieben aufweist. Falls der Energiespeicher der beweglichen Einheit 103 einen Akkumulator aufweist, kann vorgesehen sein, diesen gezielt zu entladen, um die Lebenszeit des Akkumulators zu verlängern, indem der Akkumulator für den Fall eines Überschreitens eines vorgegebenen Ladestands, beispielsweise 80 % der maximalen Ladung, auf den vorgegebenen Ladestand entladen wird.

Ferner kann vorgesehen sein, dass die bewegliche Einheit 103 aktiv gebremst werden kann. In diesem Fall wirkt der Linearmotor 107 generatorisch. Kinetische Energie der beweglichen Einheit 103 wird in einen Zwischenkreis des Linearmotors 107 zurück gespeist. Eine Zwischenkreisspannung steigt an. Damit die Zwischenkreisspannung nicht zu hoch wird, kann vorgesehen sein, diese Energie in einem vorgeschalteten Bremswiderstand in Wärme umzuwandeln. Alternativ zum Bremswiderstad kann jedoch auch in vorteilhafterweise die Energieübertragung von der Energiesendespule 125 zur Energieempfangsspule 127 aktiviert werden, um den Energiespeicher der beweglichen Einheit 103 zu laden, auch wenn diese Energie im Moment nicht benötigt wird. Somit kann der Wirkungsgrad erhöht werden, da die durch den Bremsvorgang erzeugte Energie nicht in Wärme umgewandelt, sondern in einen Energiespeicher auf der beweglichen Einheit 103 übertragen wird.

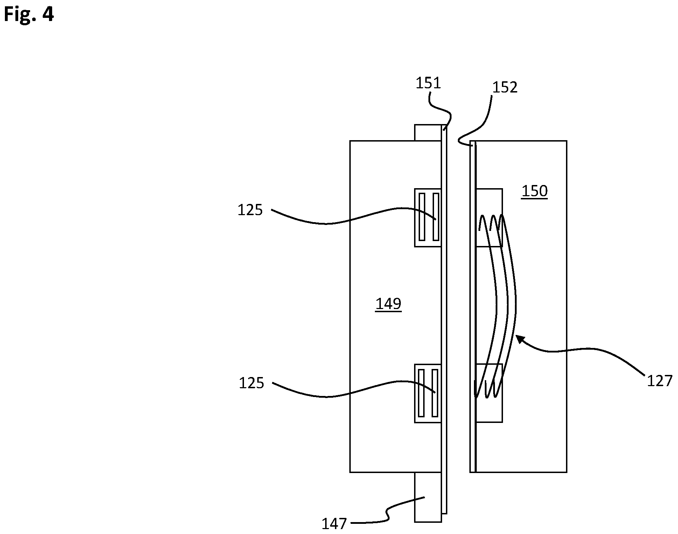

Fig. 4 zeigt ein erstes Spulenpaar bestehend aus einer Energiesendespule 125 und einer Energieempfangsspule 127. Die Energiesendespule 125 ist als sogenannte Platinenspule auf einer Platine 147 angeordnet. Dabei weist die Platine 147 Aussparungen auf, in denen ein ferromagnetisches Formteil 149 angeordnet ist. Die Energieempfangsspule 127 besteht aus mehreren Wicklungen eines Drahtes um ein weiteres ferromagnetisches Formteil 150. In diesem Ausführungsbeispiel ist die Energieempfangsspule 127 längs zu einer Fahrtrichtung gewickelt. Dadurch ist ein Aufbau der Energieempfangsspule 127 in Fahrtrichtung länger aber quer zur Fahrtrichtung schmaler. Außerdem lässt sich eine fertig gewickelte Luftspule einfacher auf das weitere ferromagnetische Formteil 150 bringen, wodurch eine günstigere Herstellung möglich wird. Ferner sind in Fig. 4 eine optionale Folien 151 und eine optionale weitere Folie 152 gezeigt, wobei die Folie 151 die Energiesendespule 125 und die weitere Folie 152 die Energieempfangsspule 127 abdeckt und dabei beispielsweise ein einfaches Hygienedesign ermöglichen, bei dem die Energiesendespule 125 und die Energieempfangsspule 127 nicht freiliegen. Die Folie 151 beziehungsweise die weitere Folie 152 kann dabei beispielsweise eine dünne Edelstahlfolie sein, eine Kunststofffolie, beispielsweise aus Teflon sein oder auch eine Lackschicht sein.

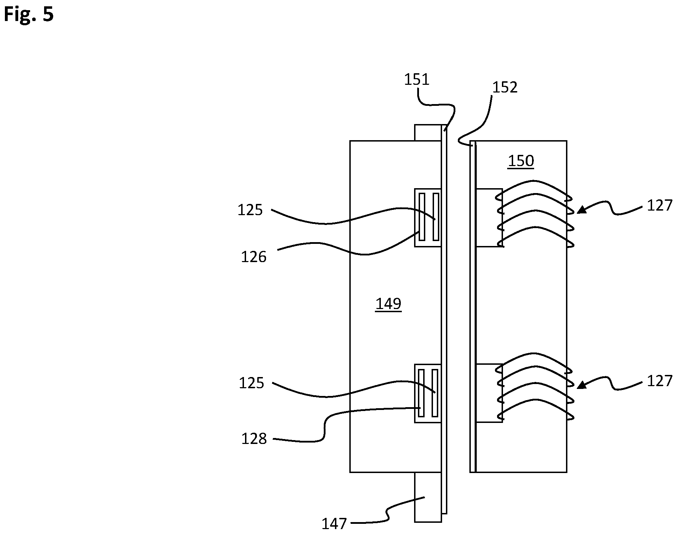

Fig. 5 zeigt ein zweites Spulenpaar bestehend aus einer Energiesendespule 125 und einer Energieempfangsspule 127. Die Energiesendespule 125 ist dabei identisch zur Fig. 4 aufgebaut, bei der Energieempfangsspule 127 sind die Wicklungen anders am weiteren ferromagnetischen Formteil 150 angeordnet. In diesem Ausführungsbeispiel ist die Energieempfangsspule 127 quer zu einer Fahrtrichtung gewickelt. Damit können mehrere bewegliche Einheiten 103 mit einem in Fahrtrichtung kürzeren Abstand hintereinander fahren. Dies ist in vielen Applikation wichtig.

In Fig. 5 ist die Energieempfangsspule 127 bestehend aus einem ersten Spulenteil 126 und einem zweiten Spulenteil 128 gezeigt. Dies ist eine optionale Ausgestaltung, es kann auch nur eine Energieempfangsspule 127 vorgesehen sein. Es kann vorgesehen sein, dass der erste Spulenteil 126 immer zugeschaltet ist und zur Versorgung einer Elektronik der beweglichen Einheit 103 dient, während der zweite Spulenteil nur zu bestimmten Zeiten zugeschaltet wird und mit der über den zweiten Spulenteil 128 übertragenen Energie das Werkzeug 137 betrieben wird. Dadurch ist es möglich, Energieverluste zu minimieren.

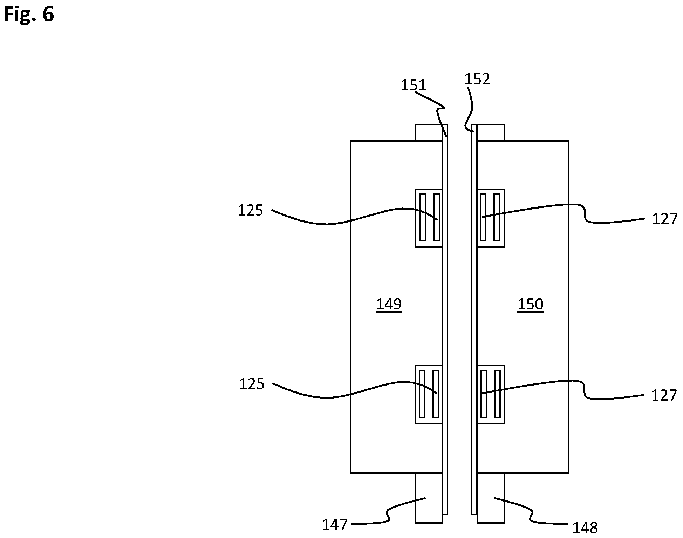

Fig. 6 zeigt eine dritte Spulenanordnung, ebenfalls bestehend aus einer Energiesendespule 125 und einer Energieempfangsspule 127. Die Energiesendespule 125 ist dabei wie in den Figuren 4 und 5 ausgestaltet. Die Energieempfangsspule 127 ist ebenfalls als Platinenspule auf einer weiteren Platine 148 angeordnet, wobei die weitere Platine 148 ebenfalls Aussparungen aufweist, in denen das weitere ferromagnetische Formteil 150 angeordnet ist. Diese Ausgestaltung ist produktionstechnisch sehr vorteilhaft, da weitere Elektronikbauelemente auf der weiteren Platine 148 direkt kontaktiert werden können und nur das weitere ferromagnetische Formteil 150 eingesetzt werden muss.

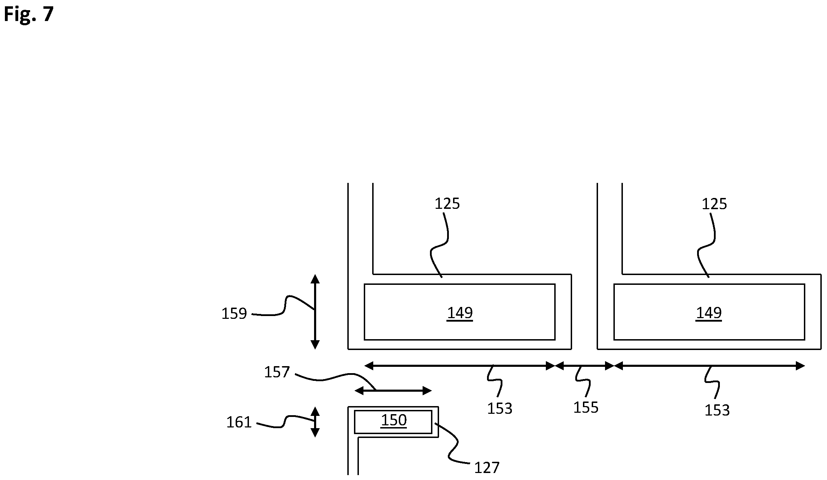

Fig. 7 zeigt eine weitere schematische Darstellung einer Spulenanordnung bestehend aus zwei Energiesendespulen 125 mit einem jeweils innerhalb der Energiesendespulen 125 angeordneten ferromagnetischen Formteil 149 und einer Energieempfangsspule 127, die ebenfalls in der Spulenmitte ein weiteres ferromagnetisches Formteil 150 aufweist. Zur vereinfachten Darstellung sind nur die innerhalb der Energiesendespulen 125 liegenden Anteile des ferromagnetischen Formteils 149 und die innerhalb der Energieempfangsspule 125 liegenden Anteile des weiteren ferromagnetischen Formteil 150 gezeigt. Die Energiesendespulen 125 und die Energieempfangsspule 127 sind dabei in Fig. 7 untereinander gezeigt, dies dient jedoch nur der schematischen Übersichtlichkeit. Die Energieempfangsspule 127 kann derart vor den Energiesendespulen 125 angeordnet sein, dass sich das ferromagnetische Formteil 149 und das weitere ferromagnetische Formteil 150 überlappen, also analog zu den Figuren 4 bis 6. Die Energiesendespulen 125 weisen eine erste Abmessung 153 auf. Die erste Abmessung 153 entspricht dabei einer Abmessung des ferromagnetischen Formteils 149. Zwischen den beiden ferromagnetischen Formteilen 149 der Energiesendespulen 125 ist eine zweite Abmessung 155 definiert. Die zweite Abmessung 155 gibt also den Abstand der beiden ferromagnetischen Formteile 149 zueinander an. Eine dritte Abmessung 157 ist eine Abmessung des weiteren ferromagnetischen Formteils 150 der Energieempfangsspule 127.

Die Energiesendespulen 125 weisen dabei eine vierte Abmessung 159 auf, die einer Höhe des ferromagnetischen Formteils 149 entspricht. Die Energieempfangsspule 127 weist eine fünfte Abmessung 161 auf, die einer Höhe des weiteren ferromagnetischen Formteils 150 der Energieempfangsspule 127 entspricht. Es kann vorgesehen sein, dass die vierte Abmessung 159 und die fünfte Abmessung 161 identisch sind. Die Definitionen der ersten bis fünften Abmessung 153, 155, 157, 159, 161 ergeben sich dabei dadurch, dass ein magnetischer Fluss im Wesentlichen durch das ferromagnetische Formteil 149 beziehungsweise das weitere ferromagnetische Formteil 150 gebündelt wird. Dadurch ergibt sich eine der zweiten Abmessung 155 entsprechende magnetische Lücke zwischen der Energiesendespule 125 und der Energieempfangsspule 127.

Wird nun die Energieempfangsspule 127 entlang der Energiesendespulen 125 bewegt, wird die Energieempfangsspule 127 sich von einer der Energiesendespulen 125 zur anderen der Energiesendespulen 125 bewegen. Dabei ist es unerheblich, ob diese Bewegung innerhalb einer stationären Einheit 111 stattfindet und die Energiesendespulen 125 Teil einer stationären Einheit sind oder ob dieser Übergang durch den Übergang zwischen zwei stationären Einheiten 111 verursacht wird. Es kann vorgesehen sein, dass für den Fall, dass die Positionsdaten ergeben, dass die Energiemenge mittels mehrerer Energiesendespulen 125, in Fig. 7 den beiden gezeigten Energiesendespulen 125, übertragen werden soll, die Energiemengeninformation anhand einer Fläche eines Zwischenraums zwischen den Energiesendespulen 125 und einer Fläche der Energieempfangsspule 127 angepasst wird. In dem Bereich, der durch die zweite Abmessung 155 definiert ist, ist aufgrund der Tatsache, dass hier kein ferromagnetisches Formteil 149 angeordnet ist, die Energieübertragung reduziert. Aus diesem Grund macht es Sinn, wenn sich die Energieempfangsspule 127 in diesem Bereich befindet, die durch die Energiesendespulen 125 übertragene Energie anzupassen. Die Anpassung kann dabei anhand einer Fläche der Energieempfangsspule 127 und einer Fläche eines Zwischenraums erfolgen, wobei die Fläche der Energieempfangsspule 127 ein Produkt aus dritter Abmessung 157 und fünfter Abmessung 161 und die Fläche des Zwischenraums ein Produkt der zweiten Abmessung 155 und der vierten Abmessung 159 ist. Ist die vierte Abmessung 159 gleich der fünften Abmessung 161, so kann die Energiemenge auch einfach anhand eines Vergleichs der zweiten Abmessung 155 und der dritten Abmessung 157 angepasst werden. Ist beispielsweise das Produkt aus zweiter Abmessung 155 und vierter Abmessung 159 10 % des Produkts aus dritter Abmessung 157 und fünfter Abmessung 161, so kann die durch die Energiesendespulen 125 übertragene Energie um 10 % erhöht werden. Die Erhöhung der Energie kann dabei durch eine Bestromung der Energiesendespule 127 mit einem Wechselstrom mit einer höheren Frequenz und/oder Amplitude erfolgen, damit während die bewegliche Einheit 103 über den Zwischenraum zwischen den Energiesendespulen 125 bewegt wird, eine konstante Energiemenge beziehungsweise Leistung übertragen wird. Es kann aufgrund von nichtlinearen Randeffekten insbesondere auch der Fall sein, das eine einfache Betrachtung einer geometrischen Überdeckung von Energieempfangsspule 127 und Zwischenraum nicht ausreicht. In diesem Fall wäre jedoch ebenfalls ein funktioneller Zusammenhang bekannt und die Bestromung könnte gemäß einer vorab ermittelten Funktion verändert werden, um eine konstante Leistung beziehungsweise Energie zu übertragen.

Es kann vorgesehen sein, dass die dritte Abmessung 157 größer als die zweite Abmessung 155 ist. In einem weiteren Ausführungsbeispiel kann es vorgesehen sein, dass die dritte Abmessung 157 größer als eine Summe aus erster Abmessung 153 und zweiter Abmessung 155 ist. In einem weiteren Ausführungsbeispiel kann es vorgesehen sein, dass die erste Abmessung 153 größer als die dritte Abmessung 157 und diese wiederum größer als die zweite Abmessung 155 ist. Mit diesen Ausführungsbeispielen kann jeweils eine durchgängige Energieübertragung von den Energiesendespulen 125 zur Energieempfangsspule 127 erreicht werden, selbst wenn sich die Energieempfangsspule 127 im linearen Transportsystem 101 von einer Energiesendespule 125 zu einer anderen Energiesendespule 125 bewegt. Dabei kann vorgesehen sein, dass die Bestromung der beiden dargestellten Energiesendespulen 125 derart synchronisiert wird, dass die durch die Bestromung erzeugten Magnetfelder phasengleich sind. Dadurch kann der im weiteren Formteil 150 erzeugte magnetische Fluss in vorteilhafter Weise addiert werden. Dies führt im Übergang zu einer gleichmäßigeren Leistungsübertragung.

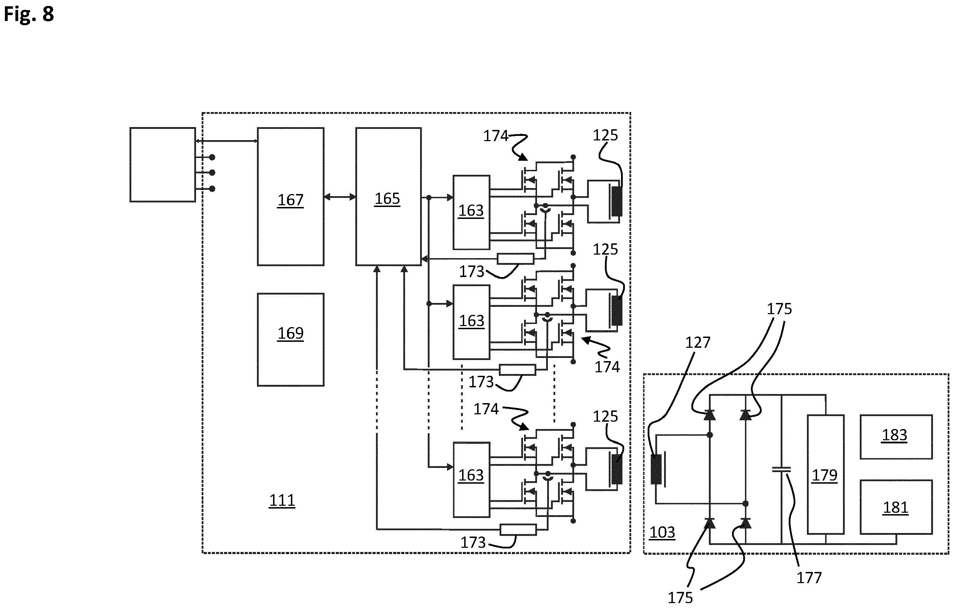

Fig. 8 zeigt ein elektrisches Schaltbild einer stationären Einheit 111 und einer beweglichen Einheit 103. Die stationäre Einheit 111 weist mehrere Energiesendespulen 125 auf. Die Energiesendespulen werden mittels MOS-Fets 174 angesteuert, wobei die MOS-Fets 174 mittels eines Treibers 163 betrieben werden können. Die Treiber 163 können dabei Signale von einem Mikrocontroller 165 empfangen. Der Mikrocontroller 165 kann mittels einer Kommunikationsschnittstelle 167 mit weiteren stationären Einheiten 111 und/oder der Steuereinheit 133 verbunden sein. Bei der Verbindung kann es sich auch um eine mehradrige Kommunikationsschnittstelle handeln, beispielsweise um eine serielle SPI Schnittstelle. Anstelle der MOS-Fets 174 können auch andere Leistungshalbleiter wie Transistoren oder IGBTs verwendet werden. Ferner weist die stationäre Einheit 111 eine Stromversorgung 169 auf. Die Treiber 163 sind jeweils über MOS-Fets 174 mit den Energiesendespulen 125 verbunden. Anhand der Positionsdaten kann eine der Energiesendespulen 125, nämlich die Energiesendespule 125, der die bewegliche Einheit 103 gegenüberliegt, ausgewählt werden. Wird nun diese Energiesendespule 125 bestromt, so induziert der Strom über sein Magnetfeld und einer magnetischen Kopplung eine entsprechende Spannung in der Energieempfangsspule 127 der beweglichen Einheit 103, die mittels Dioden 175 und eines Kondensators 177 geglättet werden kann und anschließend als bewegliche Spannungsversorgung 179 für ein Werkzeug 137 der beweglichen Einheit 103 zur Verfügung steht. Das Werkzeug 137 kann dabei mittels eines Anschlusselements 181 angeschlossen werden. Ferner kann ein Kommunikationscontroller 183 vorgesehen sein, mit dem eine Datenübertragung auf die bewegliche Einheit 103 gesteuert wird.

Ebenfalls in Fig. 8 dargestellt ist ein Strommesser 173, mit der jeweils die mittels der Energiesendespulen 125 ausgegebene Energiemenge als Energiemengenistsignal in Form einer Stromstärke zum Mikrocontroller 165 weitergegeben werden kann und anschließend die Energiemenge, die über die Energiesendespule 125 ausgegeben wird, mittels des Energiemengenistsignals geregelt wird. Diese Regelung kann dabei vom Mikrocontroller 165 durchgeführt werden. In einem alternativen Ausführungsbeispiel wird das Energiemengenistsignal über die Kommunikationsschnittstelle 167 zur Steuereinheit 133 weitergegeben und die Regelung erfolgt durch die Steuereinheit 133. In diesem Fall kann die Steuereinheit 133 das Steuersignal und insbesondere die Energiemengeninformation innerhalb des Steuersignals verändern und dieses Steuersignal wiederum an die stationäre Einheit 111 ausgeben, wobei die Energiesendespule 125 nun anhand dieses veränderten Steuersignals betrieben wird. In beiden Fällen kann anhand einer Sollstromstärke, die mit der gemessenen Stromstärke verglichen wird, geregelt werden. Alternativ kann aus der gemessenen Stromstärke eine übertragene Energiemenge oder eine übertragene Leistung ermittelt werden und anhand dieser geregelt werden.

Die Erfindung umfasst ferner die Steuereinheit 133, die eingerichtet ist, das beschriebene Verfahren durchzuführen und dem Verfahren entsprechende Steuersignale anhand der Positionsdaten auszugeben. Dabei kann ferner vorgesehen sein, dass die Steuereinheit 133 zur Regelung mittels des Energiemengenistsignals eingerichtet ist. Die Steuereinheit 133 kann auch für eine positionsabhängige zukünftige Aktivierung des Werkzeuges 137 eingerichtet sein. In diesem Fall kann eine höhere Leistungsübertragung auch vorab, beispielsweise als Vorsteuerung vorgegeben werden. Der Steuerung 133 kann beispielweise bekannt sein, dass das Werkzeug 137 in einer vorgegebenen Entfernung betrieben werden soll. In diesem Fall kann die Steuerung 133 schon im Vorgriff festlegen, dass in dieser Entfernung eine höhere Leistungsübertragung stattfinden soll. Dies stellt eine Alternative zur Regelung mittels Energiemengenistsignalen dar. Die Erfindung umfasst ferner ein Computerprogramm, umfassend Programmcode, welcher ausgeführt auf einem Computer diesen dazu veranlasst, das Verfahren durchzuführen. Ein solches Computerprogramm kann beispielsweise innerhalb der Steuereinheit 133 gespeichert sein. Ferner umfasst die Erfindung ein maschinenlesbares Speichermedium, umfassend das Computerprogramm.

Die Erfindung umfasst ebenfalls eine stationäre Einheit 111 des linearen Transportsystems 101, die einen Stator 109 mit einer oder mehreren Antriebsspulen aufweist. Zusätzlich umfasst die stationäre Einheit 111 mindestens eine Energiesendespule 125 und ist eingerichtet, ein Steuersignal von der Steuereinheit 133 zu empfangen. Das Steuersignal umfasst eine Identifikationsinformation, mit der mindestens eine Energiesendespule 125 der stationären Einheit 111 identifiziert werden kann, und eine Energiemengeninformation, die die Energiemenge, die übertragen werden soll, umfasst. Die Steuereinheit 133 ist eingerichtet, anhand der Identifikationsinformation eine oder mehrere Energiesendespulen 125 der stationären Einheit 111 auszuwählen und einen Energieübertrag der einen oder mehreren Energiesendespulen 125 anhand der Energiemengeninformation einzustellen.

In einem Ausführungsbeispiel umfasst die stationäre Einheit 111 eine Regelung 173, die beispielsweise als Regelschleife ausgestaltet sein kann, und mittels derer ein Energiemengenistsignal ausgewertet und zum Einstellen des Energieübertrags verwendet wird.

In einem Ausführungsbeispiel weist die stationäre Einheit 111 zusätzlich eine Führungsschiene 105 auf, mit der die bewegliche Einheit 103 entlang der stationären Einheit 111 bewegt werden kann.

Die Erfindung umfasst ferner ein lineares Transportsystem 101 mit einer Steuereinheit 133, die wie oben beschrieben ausgestaltet ist, mit mindestens einer stationären Einheit 111, die wie oben beschrieben ausgestaltet ist, und mit mindestens einer beweglichen Einheit 103, die wie oben beschrieben ausgestaltet ist. Das lineare Transportsystem 101 kann also aus mehreren stationären Einheiten 111 zusammengesetzt sein, und es ist ebenfalls möglich, dass das lineare Transportsystem 101 mehrere bewegliche Einheiten 103 umfasst, obwohl in den Figuren jeweils nur eine bewegliche Einheit 103 gezeigt ist.

Das lineare Transportsystem 101 kann beispielsweise in der Automatisierungstechnik angewendet werden. Das an der beweglichen Einheit 103 angeordnete Werkzeug 137 kann beispielsweise eine Greifer, einen Schieber, einen Bohrer, eine Ausrichtevorrichtung, eine mechanische oder magnetische Kopplung mehrerer beweglicher Einheiten 103, ein Messwerkzeug zur Messung einer physikalischen Größe wie beispielsweise Temperatur, Druck, Strom, Spannung, Beschleunigung, Masse, Lichteinfall umfassen. Ferner kann das Werkzeug 137 einen Lesekopf, mit dem ein Encoderband ausgelesen werden kann und so eine weitere Positionsbestimmung ermöglicht wird, umfassen. Diese weitere genauere Position kann dann auch zu einer verbesserten Regelung der beweglichen Einheit 103 und/oder Ansteuerung des Linearmotors 107 genutzt werden. Dieses Prinzip kann natürlich auch mit anderen auf der beweglichen Einheit 103 gemessenen physikalischen Größen, beispielsweise Beschleunigungen oder Schwingungen, genutzt werden. Außerdem können mittels des Werkzeugs 137 physikalische Größen auf der beweglichen Einheit 103 erzeugt werden. Über eine Bewegung des Werkzeugs 137 der beweglichen Einheit 103 könnte eine Kraft erzeugt werden und mit einer einstellbaren Stromgrenze der verwendeten Antriebsspule ließe sich die Kraft auch regeln bzw. einstellen. Ferner könnte ein Vakuum erzeugt werden. Damit können Produkte über einen besonderen Sauger besonders schonend für das Produkt selbst aufgenommen und wieder abgegeben werden. Es könnten Prüfspannungen erzeugt werden. Über solche Prüfspannungen wäre es auch möglich, Produkte die aus komplexeren elektronischen Schaltkreisen bestehen, funktionell zu prüfen.

Auch eine Kommunikation zu einem komplexeren Produkt mit einer Kommunikationsschnittstelle wäre möglich. Es können auch andere physikalische Größen zur Materialprüfung erzeugt werden, beispielsweise Ultraschall, oder Ströme oder Licht. Es kann auch eine Kommunikation zu einem durch die bewegliche Einheit 103 transportierten Werkstück aufgebaut werden und so Prüfungen oder andere Produktionsüberwachungen stattfinden, beispielsweise ein lückenloses Produkttracking, wenn diese Daten mit weiteren Daten in der Steuereinheit 133 verbunden und beispielsweise in eine Datenbank geschrieben werden. Es können somit in vorteilhafterweise Daten auf einem Werkstück geschrieben bzw. von diesem gelesen werden.

Ferner könnte eine Heizung vorgesehen sein, um zielgerichtet und begrenzt auf eine kleine Stelle eine höhere Temperatur zu erzeugen um bei einem Prozess beispielsweise einen Kleber oder Lack schneller und energieeffizienter zu trocknen. Dabei kann vorgesehen werden, ein Werkstück oder ein Produkt auf der beweglichen Einheit 103 auf einer bestimmten Temperatur zu halten, beispielsweise um das Werkstück oder Produkt länger bearbeiten zu können. Dabei kann beispielsweise auf die Datenübertragung verzichtet werden und nur in den Bereichen, in denen geheizt werden soll, Energie mittels der zugehörigen Energiesendespule übertragen werden. Diese übertragene Energie wird dann auf der beweglichen Einheit zur Heizung verwendet, beispielweise indem die Energieempfangsspule direkt mit einem Heizelement verbunden ist und damit automatisch heizt, wenn Energie übertragen wird. Mit einer schaltbaren Magnetfeldquelle (Spule) können magnetische Teile einfach fixiert, transportiert und wieder abgesetzt werden. Ferner kann die bewegliche Einheit 103 eine Kamera oder andere Sensoren umfassen, um das lineare Transportsystem 101 auf Verschleiß, Dreck oder anderes hin zu untersuchen. Dies ist insbesondere nützlich wenn das lineare Transportsystem 101 nur schwer oder überhaupt nicht zugängliche Stellen aufweist.

Auf der beweglichen Einheit 103 können dabei Bewegungen jeglicher Art durchgeführt werden, beispielsweise auch quer zur durch die Führungsschiene 105 definierten Fahrtrichtung. Ein Greifer kann Produkte greifen und wieder loslassen, ohne dass eine mechanische Kulisse mit Federn benötigt wird. Es kann vorgesehen sein, je nach Status des Produktes, dieses auch auf einem anderen Band abzulegen und so beispielsweise auszusortieren. Das Werkzeug 137 kann einen Schieber aufweisen, um Produkte gezielt von einer beweglichen Einheit 103 beispielsweise auf ein Band zu schieben. Über den Schieber oder ein ähnlich bewegbares Element auf der beweglichen Einheit 103 kann ein Produktfluss, der über ein lineares Transportsystem 101 abgewickelt wird, auf verschiedene weiterführende Transportmittel wie beispielsweise Bänder verteilt werden. So ist es mit nur einem linearen Transportsystem 101 ohne Weiche (mit welcher die beweglichen Einheiten 103 in unterschiedliche Richtungen geführt werden könnten) möglich, eine schnellen Produktfluss bedarfsgerecht aufzuteilen und in der umgekehrten Richtung auch wieder zusammen zu führen.

Es können durch das Werkzeug 137 Bewegungen ausgeführt werden, mit denen das Produkt manipuliert werden kann, beispielsweise um einen Karton aufzurichten oder Produkte zu bearbeiten. Dabei können Bohrer zum Einsatz kommen oder Druck mittels einer Presse auf das Produkt ausgeübt werden. Ferner kann eine Drehbewegung erfolgen, die eine Ausrichtung von Produkten von längs zu quer ändert, beispielsweise mittels Drehung einer Werkstückhalterung. Produkte können angehoben werden. Produkte können gedreht werden und damit kann beispielsweise ein Deckel einer Flasche verschraubt werden. Produkte können auch in Ihrem Abstand zueinander verändert werden. Durch eine Aktorik auf der beweglichen Einheit 103 kann ein Produkt verschoben werden, so dass Produktfehlstellen auf einer leeren beweglichen Einheit 103 ausgeglichen werden können. So können in einer Reihe von beweglichen Einheiten 103 mit einer Produktfehlstelle in der Reihe, die Produkte auf den Einheiten links davon um den halben Abstand nach rechts bewegt werden und auf der anderen Seite umgekehrt, so dass die Produkte zu weiteren Verarbeitung ohne Fehlstelle dazwischen mit einem gleichen Abstand zueinander von einer folgenden Maschineneinheit entnommen werden können.

Produkte wie Flaschen können exakt ausgerichtet werden, wenn man beispielsweise auf einer Flasche ein Etikett, eine Bedruckung oder ein anderes Bauteil wie z.B. einen Trinkhalm aufbringen will. Bewegungen können überlagert werden. Verschiedene Hardware kann in das Werkzeug 137 der beweglichen Einheit 103 integriert sein, und kann über Sollwerte angesteuert werden, beispielsweise auch über PWM Signale (Magnetventile, DC Motor, Stepper, kleiner Servo, VoiceCoil Motor, Vibrationselemente, Elektromagneten, Vakuum, Laser, Ultraschallquelle). Über HW Endlagenschalter oder Fahrten gegen einen Anschlag lässt sich eine absolute Positionierung auch ohne Rückführung erreichen beispielsweise bei einem DC Motor. Über Greifer oder andere Mechanik und eine Messung der Stromaufnahme in der Bewegung könnten Produkte vermessen werden (auch ein Condition Monitoring von Komponenten der beweglichen Einheit 103 als auch Produktkomponenten wird möglich). Es können Produkte sortiert werden und beispielsweise zwischen beweglichen Einheiten 103 und Ablagestationen übergeben werden.

Bewegliche Einheiten 103 können zur Erhöhung der Antriebskraft bei Bedarf an- und abgekoppelt werden, beispielsweise indem ein mechanisch bewegtes Teil der einen beweglichen Einheit 103 in der anderen beweglichen Einheit 103 verhakt wird oder mittels einer elektromagnetischen Kopplung. Bei einer Synchronisation mit auf einem Band bewegten Produkten kann zwischen dem beweglichen Einheiten 103 Platz eingespart werden, wenn das Werkzeug 137 senkrecht zur durch die Führungsschiene 105 vorgegebenen Fahrtrichtung beweglich ist. Dadurch kann das Werkzeug 137 in engere Produktlücken eintauchen und mit kleineren Lücken zurechtkommen und so eine Maschinenleistung erhöhen. Bewegliche Einheiten 103, die ein Produkt zusammen transportieren können während des Transports eine mechanische Sicherheitskopplung eingehen, die auch bei Fehler (Stromausfall, etc.) dafür sorgt, dass das empfindliche Produkt gehalten wird und nicht herunterfallen kann oder das Produkt selber zerstört wird, beispielsweise durch unterschiedliches Austrudeln der beweglichen Einheiten 103. Dies ist sowohl dann möglich, wenn beide bewegliche Einheiten 103 Teil desselben linearen Transportsystems 101 als auch wenn beide bewegliche Einheiten 103 Teil von unterschiedlichen linearen Transportsystemen 101 sind.

Ein elektrisch betriebener Werkzeugwechsel auf der beweglichen Einheit 103 ist ebenfalls möglich. Werkzeuge/Aufnahmen/Halterungen können an ein Maß des Produktes intelligent angepasst werden.

Es kann vorgesehen sein, die Frequenz und/oder die Amplitude mittels der Energiemengeninformation bedarfsgerecht einzustellen. Dabei kann die Energiemengeninformation für jede bewegliche Einheit 103 unterschiedlich sein. Eine Position der beweglichen Einheit und die applikative Aufgabe der beweglichen Einheit 103 an ihrer Position kann der Steuereinheit 133 bekannt sein, so dass in Bereichen, in denen wenig (applikative) Energie z.B. für bestimme Aktionen auf der beweglichen Einheit 103 benötigt wird, ein primärer Spulenstrom der Energieübertragungsspule 125 in Frequenz, Amplitude aber auch Signalform (beispielsweise Sinus oder Dreieck) angepasst werden kann, so dass weniger (oder mehr) Energie übertragen werden kann. In vorteilhafter Weise kann die bewegliche Einheit 103 mittels einer über die stationäre Antenne 129 und bewegliche Antenne 131 erfolgenden Datenkommunikation auch Informationen über einen Energiezustand der beweglichen Einheit 103 übertragen, so das der primäre Spulenstrom entsprechend optimal und insgesamt möglichst verlustfrei eingestellt beziehungsweise über die Kommunikationsrückkopplung geregelt werden kann. Somit kann z.B. auch vermieden werden, dass bei einer (gleichbleibend eingestellten) zu hohen Energieübertragung keine überflüssige Energie auf der beweglichen Einheit 103 verbraucht und beispielsweise in Verlustwärme umgewandelt werden muss, insbesondere an Positionen oder in Situationen in denen nicht so viel Energie auf der beweglichen Einheit 103 benötigt wird. Eine andere Möglichkeit einer solchen Energieregelung ist das Öffnen und Schließen der Energieempfangsspule 127 über eine elektronische Schaltung. Dadurch kann auch beispielsweis das Werkzeug 137 ein- oder ausgeschaltet werden. Ferner können auf der beweglichen Einheit 103 Verbraucher vorhanden sein, die bei zu hoher Energieübertragung auf die bewegliche Einheit 103, beispielsweise aufgrund von Schwankungen im Luftspalt oder unterschiedliche Spulenüberdeckungen, zu viel übertragene Energie abbauen können, so dass auf der beweglichen Einheit 103 keine Überspannungen entstehen können. Solche Verbraucher können beispielsweise Varistoren oder Leistungswiderstände mit entsprechenden elektronischer Beschaltung sein.

Für alle der genannten Anwendungen kann sowohl die erfindungsgemäße Energieübertragung als auch eine Datenübertragung zwischen stationärer Einheit 111 und beweglicher Einheit 103 erforderlich sein.

### Bezugszeichenliste

- 101: Transportsystem
- 103: bewegliche Einheit
- 105: Führungsschiene
- 107: Linearmotor
- 109: Stator
- 111: stationäre Einheit
- 113: Läufer
- 117: Magnet
- 125: Energiesendespule
- 126: erster Spulenteil
- 127: Energieempfangsspule
- 128: zweiter Spulenteil
- 129: stationäre Antenne
- 131: bewegliche Antenne
- 133: Steuereinheit
- 135: Antriebsspule
- 137: Werkzeug
- 139: Laufrolle
- 141: Lauffläche
- 143: Positionsdetektionselement
- 145: Positionssensor
- 147: Platine
- 148: weitere Platine
- 149: ferromagnetisches Formteil
- 150: weiteres ferromagnetisches Formteil
- 151: Folie
- 152: weitere Folie
- 153: erste Abmessung
- 155: zweite Abmessung
- 157: dritte Abmessung
- 159: vierte Abmessung
- 161: fünfte Abmessung
- 163: Treiber
- 165: Mikrocontroller
- 167: Kommunikationsschnittstelle
- 169: Stromversorgung
- 173: Strommesser
- 174: MOS-Fet
- 175: Dioden
- 177: Kondensator
- 179: bewegliche Stromversorgung
- 181: Anschlusselement
- 183: Kommunikationscontroller

## Patentansprüche

1. Verfahren zum Übertragen von Energie von einer stationären Einheit (111) eines linearen Transportsystems (101) zu einer beweglichen Einheit (103) eines linearen Transportsystems (101), wobei das lineare Transportsystem (101) eine Führungsschiene (105) zum Führen der beweglichen Einheit (103), mehrere stationäre Einheiten (111) sowie einen Linearmotor (107) zum Antreiben der beweglichen Einheit (103) entlang der Führungsschiene (105) aufweist, wobei der Linearmotor (107) einen Stator (109) und einen Läufer (113) umfasst, wobei der Stator (109) die stationären Einheiten (111) umfasst, welche jeweils eine oder mehrere Antriebsspulen umfassen, wobei der Läufer (113) an der beweglichen Einheit (103) angeordnet ist und einen oder mehrere Magnete (117) umfasst, wobei die stationären Einheiten (111) jeweils eine oder mehrere Energiesendespulen (125) umfasst oder umfassen, wobei die bewegliche Einheit (103) mindestens eine Energieempfangsspule (127) umfasst, wobei das lineare Transportsystem (101) eine Steuereinheit (133) umfasst, wobei folgende Schritte von der Steuereinheit (133) ausgeführt werden:
- Ermitteln von Positionsdaten der Energieempfangsspule (127) der beweglichen Einheit (103);
- Auswahl mindestens einer Energiesendespule (125) innerhalb des linearen Transportsystems (101) anhand der Positionsdaten der Energieempfangsspule (127);
- Ausgabe eines Steuersignals an die stationäre Einheit (111), die die mindestens eine Energiesendespule (125) umfasst, umfassend eine Identifikationsinformation, mit der die mindestens eine Energiesendespule (125) identifiziert werden kann, wobei das Steuersignal eine Energiemengeninformation umfasst, wobei die Energiemengeninformation eine Energiemenge, die übertragen werden soll, umfasst, wobei die Energiemenge zu einem ersten Zeitpunkt eine Belastungsenergiemenge und zu einem zweiten Zeitpunkt eine Leerlaufenergiemenge umfasst, wobei die Belastungsenergiemenge zum Betrieb eines auf der beweglichen Einheit (103) angeordneten Werkzeugs (137) ausreichend ist, wobei die Leerlaufenergiemenge zur Aufrechterhaltung einer Energieversorgung einer Kommunikationseinheit der beweglichen Einheit (103) ausreichend ist, jedoch nicht dazu ausreicht, das Werkzeug zusätzlich eine Aktion ausführen zu lassen.

2. Verfahren nach Anspruch 1, wobei die Energiemengeninformation eine Amplitude und/oder eine Frequenz einer Wechselspannung oder eines Wechselstroms umfasst.

3. Verfahren nach einem der Ansprüche 1 oder 2, wobei die Positionsdaten anhand einer Messung zumindest eines Positionssensors (145) ermittelt werden und/oder anhand einer Bestromung des Linearmotors (107) ermittelt werden.

4. Verfahren nach einem der Ansprüche 1 bis 3, wobei für den Fall, dass die Positionsdaten ergeben, dass die Energiemenge mittels mehrerer Energiesendespulen (125) übertragen werden soll, wobei die mehreren Energiesendespulen (125) entlang der Führungsschiene (105) hintereinander angeordnet sind, die Energiemengeninformation anhand einer Fläche eines Zwischenraums zwischen den Energiesendespulen (125) und einer Fläche der Energieempfangsspule (127) angepasst wird.

5. Verfahren nach Anspruch 4, wobei weiterhin eine Phaseninformation ausgegeben wird, wobei die mehreren Energiesendespulen (125) phasengleich bestromt werden.

6. Verfahren nach Anspruch 4 oder 5, wobei die Energiemenge erhöht wird, wenn sich die bewegliche Einheit (103) im Bereich des Zwischenraums befindet.

7. Verfahren nach einem der Ansprüche 1 bis 6, wobei ein Energiemengenistsignal der beweglichen Einheit (103) ausgewertet wird und die Energiemenge anhand des Energiemengenistsignals geregelt wird.

8. Steuereinheit (133), die eingerichtet ist, eines der Verfahren der Ansprüche 1 bis 7 durchzuführen, wobei die Steuereinheit (133) dazu eingerichtet ist, Positionsdaten der beweglichen Einheit (103) eines linearen Transportsystems (101) nach Anspruch 14 zu ermitteln, daraus die Positionsdaten einer Energieempfangsspule (127) der beweglichen Einheit (103) zu ermitteln und mindestens eine Energiesendespule (125) einer stationären Einheit (111) nach Anspruch 11 des linearen Transportsystems (101) zur Durchführung einer Energieübertragung auszuwählen und ein Steuersignal, umfassend eine Energiemengeninformation und eine Identifikationsinformation der mindestens einen ausgewählten Energiesendespule (125) an diejenige stationäre Einheit (111) auszugeben, der die mindestens eine Energiesendespule (125), die ausgewählt wurde, um die Energieübertragung durchzuführen, zugeordnet ist, wobei die Energiemengeninformation eine Energiemenge, die übertragen werden soll, umfasst, wobei die Energiemenge zu einem ersten Zeitpunkt eine Belastungsenergiemenge und zu einem zweiten Zeitpunkt eine Leerlaufenergiemenge umfasst, wobei die Belastungsenergiemenge zum Betrieb eines auf der beweglichen Einheit (103) angeordneten Werkzeugs (137) ausreichend ist, wobei die Leerlaufenergiemenge zur Aufrechterhaltung einer Energieversorgung einer Kommunikationseinheit der beweglichen Einheit (103) ausreichend ist, jedoch nicht dazu ausreicht, das Werkzeug zusätzlich eine Aktion ausführen zu lassen.

9. Computerprogramm, umfassend Programmcode, welcher ausgeführt auf einer Steuereinheit nach Anspruch 8 diese dazu veranlasst, das Verfahren der Ansprüche 1 bis 7 durchzuführen.

10. Maschinenlesbares Speichermedium, umfassend das Computerprogramm nach Anspruch 9.

11. Stationäre Einheit (111) für ein lineares Transportsystem (101) nach Anspruch 14, wobei die stationäre Einheit (111) einen Stator (109) mit einer oder mehreren Antriebsspulen zum Antrieb eines Läufers (113) umfasst, wobei die stationäre Einheit (111) mindestens eine Energiesendespule (125) umfasst, wobei die stationäre Einheit (111) eingerichtet ist, ein Steuersignal der Steuereinheit (133) nach Anspruch 8 zu empfangen, umfassend eine Identifikationsinformation, mit der mindestens eine Energiesendespule (125) identifiziert werden kann, und eine Energiemengeninformation, die die Energiemenge, die übertragen werden soll, umfasst, und anhand der Identifikationsinformation eine oder mehrere Energiesendespulen (125) der stationären Einheit (111) auszuwählen und einen Energieübertrag der einen oder mehreren Energiesendespulen (125) anhand der Energiemengeninformation einzustellen, wobei die stationäre Einheit (111) eingerichtet ist, zu einem ersten Zeitpunkt eine Belastungsenergiemenge und zu einem zweiten Zeitpunkt eine Leerlaufenergiemenge einzustellen, wobei die Belastungsenergiemenge zum Betrieb eines auf der beweglichen Einheit (103) angeordneten Werkzeugs (137) ausreichend ist, wobei die Leerlaufenergiemenge maximal zur Aufrechterhaltung einer Energieversorgung einer Kommunikationseinheit der beweglichen Einheit (103) ausreichend ist, jedoch nicht dazu ausreicht, das Werkzeug zusätzlich eine Aktion ausführen zu lassen.

12. Stationäre Einheit (111) nach Anspruch 11, ferner aufweisend eine Regelschleife, mittels derer ein Energiemengenistsignal ausgewertet und zum Einstellen des Energieübertrags verwendet wird.

13. Stationäre Einheit (111) nach Anspruch 11 oder 12, ferner aufweisend eine Führungsschiene (105).

14. Lineares Transportsystem (101) mit einer Steuereinheit (133) nach Anspruch 8, einer stationären Einheit (111) nach einem der Ansprüche 11 bis 13 und einer beweglichen Einheit (103), wobei die bewegliche Einheit (103) eine Energieempfangsspule (127), eine Kommunikationseinheit und ein auf ihr angeordnetes Werkzeug (137) aufweist, wobei ein Läufer (113) an der beweglichen Einheit (103) angeordnet ist und einen oder mehrere Magnete (117) umfasst, wobei der Stator (109) und der Läufer (113) einen Linearantrieb bilden.

## Claims

1. A method for transferring energy from a stationary unit (111) of a linear transport system (101) to a movable unit (103) of a linear transport system (101), wherein the linear transport system (101) comprises a guide rail (105) for guiding the movable unit (103), a plurality of stationary units (111), and a linear motor (107) for driving the movable unit (103) along the guide rail (105), wherein the linear motor (107) comprises a stator (109) and a rotor (113), wherein the stator (109) comprises the stationary units (111), each comprising one or a plurality of drive coils, wherein the rotor (113) is arranged on the movable unit (103) and comprises one or a plurality of magnets (117), wherein the stationary units (111) each comprise one or a plurality of energy-transmitting coils (125), wherein the movable unit (103) comprises at least one energy-receiving coil (127), wherein the linear transport system (101) comprises a controller (133), wherein the following steps are carried out by the controller (133):
- determining position data of the energy-receiving coil (127) of the movable unit (103);
- selecting at least one energy-transmitting coil (125) within the linear transport system (101) based on position data from the energy-receiving coil (127);
- outputting a control signal to the stationary unit (111) comprising the at least one energy-transmitting coil (125), comprising an identification information by which the at least one energy-transmitting coil (125) may be identified, wherein the control signal comprises energy quantity information, wherein the energy quantity information comprises an energy quantity to be transmitted, wherein the quantity of energy comprises a load energy quantity at a first point in time and an idle energy quantity at a second point in time, wherein the load energy quantity is sufficient to operate a tool (137) arranged on the movable unit (103), wherein the idle energy quantity is sufficient to maintain a power supply to a communication unit of the movable unit (103), however, is not sufficient to have the tool carry out an additional action.

2. The method according to claim 1, wherein the energy quantity information comprises an amplitude and/or a frequency of an AC voltage or an AC current.

3. The method according to any one of claims 1 or 2, wherein the position data are determined based on a measurement of at least one position sensor (145) and/or are determined based on a current supply to the linear motor (107).

4. The method according to any one of claims 1 to 3, wherein in the case that the position data indicate that the energy quantity is to be transmitted with the aid of a plurality of energy-transmitting coils (125), the plurality of energy-transmitting coils (125) being arranged in series along the guide rail (105), the energy quantity information is adjusted based on a surface of an intermediate space between the energy-transmitting coils (125) and a surface of the energy-receiving coil (127).

5. The method according to claim 4, wherein a phase information is furthermore output, wherein the plurality of energy-transmitting coils (125) is energized in phase.

6. The method according to claim 4 according to 5, wherein the energy quantity is increased if the movable unit (103) is arranged in the area of the intermediate space.

7. The method according to any one of claims 1 to 6, wherein an actual energy quantity signal of the movable unit (103) is evaluated and the energy quantity is controlled based on the actual energy quantity signal.

8. A controller (133) configured to carry out any of the methods according to claims 1 to 7, wherein the controller (133) is set up to detect position data of the movable unit (103) of a linear transport system (101) according to claim 14, to determine the position data of an energy-receiving coil (127) of the movable unit (103) therefrom and to select at least one energy-transmitting coil (125) of the stationary unit (111) according to claim 11 of the linear transport system (101) in order to carry out an energy transmission and to output a control signal comprising an energy-quantity information and an identification information of the at least one selected energy-transmitting coil (125) to that stationary unit (111) to which the at least one energy-transmitting coil (125) selected to carry out the energy transmission is allocated, wherein the energy-quantity information comprises an energy quantity to be transmitted, wherein the energy quantity comprises, at a first point in time, a load energy quantity and, at a second point in time, an idle energy quantity, wherein the load energy quantity is sufficient to operate a tool (137) arranged on the movable unit (103), wherein the idle energy quantity is sufficient to maintain an energy supply of a communication unit of the movable unit (103), however, is not sufficient to have the tool carry out an additional action.

9. A computer program comprising program code which, when executed on a controller according to claim 8 causes the controller to perform the method according to claims 1 to 7.

10. A machine-readable storage medium comprising the computer program according to claim 9.

11. A stationary unit (111) for a linear transport system (101) according to claim 14, wherein the stationary unit (111) comprises a stator (109) having one or a plurality of drive coils for driving a rotor (113), wherein the stationary unit (111) comprises at least one energy-transmitting coil (125), wherein the stationary unit (111) is configured to receive a control signal of the controller (133) according to claim 8, comprising an identification information that may identify at least one energy-transmitting coil (125), and an energy quantity information comprising the quantity of energy to be transferred, and selecting one or a plurality of energy-transmitting coils (125) of the stationary unit (111) based on the identification information and adjusting an energy transfer of the one or a plurality of energy-transmitting coils (125) based on the energy quantity information, wherein the stationary unit (111) is configured to set a load energy quantity at a first point in time and an idle energy quantity at a second point in time, wherein the load energy quantity is sufficient to operate a tool (137) arranged on the movable unit (103), wherein the idle energy quantity is maximally sufficient to maintain a power supply to a communication unit of the movable unit (103), however, is not sufficient to have the tool carry out an additional action.

12. The stationary unit (111) according to claim 11, further comprising a control loop with the aid of which an actual energy quantity signal is evaluated and used to adjust the energy transfer.

13. The stationary unit (111) according to claim 11 or 12, further comprising a guide rail (105).

14. A linear transport system (101) comprising a controller (133) according to claim 8, a stationary unit (111) according to any one of claims 11 to 13, and a movable unit (103), wherein the movable unit (103) comprises an energy-receiving coil (127), a communication unit and a tool (137) arranged thereon, wherein a rotor (113) is arranged on the movable unit (103) and comprises one or a plurality of magnets (117), wherein the stator (109) and the rotor (113) form a linear drive.

## Revendications

1. Procédé de transfert d'énergie d'une unité stationnaire (111) d'un système de transport linéaire (101) à une unité mobile (103) d'un système de transport linéaire (101), le système de transport linéaire (101) comprenant un rail de guidage (105) pour guider l'unité mobile (103), une pluralité d'unités stationnaires (111) ainsi qu'un moteur linéaire (107) pour entraîner l'unité mobile (103) le long du rail de guidage (105), le moteur linéaire (107) comprenant un stator (109) et un rotor (113), le stator (109) comprenant les unités stationnaires (111), chacune comprenant une ou plusieurs bobines d'entraînement, le rotor (113) étant agencé sur l'unité mobile (103) et comprenant un ou plusieurs aimants (117), les unités stationnaires (111) comprenant chacune une ou plusieurs bobines (125) d'émission d'énergie, l'unité mobile (103) comprenant au moins une bobine (127) de réception d'énergie, le système de transport linéaire (101) comprenant une unité de commande (133), les étapes suivantes étant mises en œuvre par l'unité de commande (133) :
- déterminer des données de position de la bobine (127) de réception d'énergie de l'unité mobile (103) ;
- sélectionner au moins une bobine (125) d'émission d'énergie à l'intérieur du système de transport linéaire (101) sur la base des données de position de la bobine (127) de réception d'énergie ;
- émettre un signal de commande vers l'unité stationnaire (111) comprenant l'au moins une bobine (125) d'émission d'énergie, comprenant des informations d'identification permettant d'identifier l'au moins une bobine (125) d'émission d'énergie, le signal de commande comprenant des informations de quantité d'énergie, les informations de quantité d'énergie comprenant une quantité d'énergie à transmettre, ladite quantité d'énergie comprenant une quantité d'énergie de charge à un premier instant et une quantité d'énergie de repos à un deuxième instant, ladite quantité d'énergie de charge étant suffisante pour faire fonctionner un outil (137) agencé sur l'unité mobile (103), ladite quantité d'énergie de repos étant suffisante pour maintenir une alimentation en énergie d'une unité de communication de l'unité mobile (103), mais insuffisante pour faire exécuter une action supplémentaire à l'outil.

2. Procédé selon la revendication 1, dans lequel les informations sur la quantité d'énergie comprennent une amplitude et/ou une fréquence d'une tension ou d'un courant alternatif.

3. Procédé selon l'une des revendications 1 ou 2, dans lequel les données de position sont déterminées sur la base d'une mesure d'au moins un capteur de position (145) et/ou sont déterminées sur la base d'une alimentation en courant du moteur linéaire (107).

4. Procédé selon l'une des revendications 1 à 3, dans lequel, dans le cas où les données de position indiquent que la quantité d'énergie doit être transmise au moyen d'une pluralité de bobines (125) d'émission d'énergie, les bobines de la pluralité de bobines (125) d'émission d'énergie étant agencées les unes derrière les autres le long du rail de guidage (105), les informations de quantité d'énergie sont adaptées sur la base d'une surface d'un espace intermédiaire entre les bobines (125) d'émission d'énergie et d'une surface de la bobine (127) de réception d'énergie.

5. Procédé selon la revendication 4, dans lequel on délivre en outre une information de phase, les bobines de la pluralité de bobines (125) d'émission d'énergie étant alimentées en phase.

6. Procédé selon la revendication 4 ou 5, dans lequel la quantité d'énergie est augmentée lorsque l'unité mobile (103) se trouve dans la zone de l'espace intermédiaire.

7. Procédé selon l'une des revendications 1 à 6, dans lequel un signal de quantité d'énergie réelle de l'unité mobile (103) est évalué et la quantité d'énergie est régulée sur la base du signal de quantité d'énergie réelle.

8. Unité de commande (133) agencée pour mettre en œuvre l'un des procédés des revendications 1 à 7, l'unité de commande (133) étant agencée pour déterminer des données de position de l'unité mobile (103) d'un système de transport linéaire (101) selon la revendication 14, pour déterminer, à partir de ces données, les données de position d'une bobine (127) de réception d'énergie de l'unité mobile (103) et pour sélectionner au moins une bobine (125) d'émission d'énergie d'une unité stationnaire (111) selon la revendication 11 du système de transport linéaire (101) afin d'effectuer un transfert d'énergie et d'émettre un signal de commande comprenant des informations de quantité d'énergie et des informations d'identification de l'au moins une bobine (125) d'émission d'énergie sélectionnée vers l'unité stationnaire (111) concernée, à laquelle est associée l'au moins une bobine (125) d'émission d'énergie qui a été sélectionnée pour effectuer le transfert d'énergie, les informations de quantité d'énergie comprenant une quantité d'énergie à transférer, la quantité d'énergie comprenant une quantité d'énergie de charge à un premier moment et une quantité d'énergie de repos à un deuxième moment, la quantité d'énergie de charge étant suffisante pour faire fonctionner un outil (137) placé sur l'unité mobile (103), la quantité d'énergie de repos étant suffisante pour maintenir une alimentation en énergie d'une unité de communication de l'unité mobile (103), mais insuffisante pour permettre à l'outil d'effectuer une action supplémentaire.

9. Programme d'ordinateur comprenant un code de programme qui, lorsqu'il est exécuté sur une unité de commande selon la revendication 8, amène celle-ci à mettre en œuvre le procédé des revendications 1 à 7.

10. Support de stockage lisible par machine comprenant le programme d'ordinateur selon la revendication 9.

11. Unité stationnaire (111) pour un système de transport linéaire (101) selon la revendication 14, l'unité stationnaire (111) comprenant un stator (109) avec une ou plusieurs bobines d'entraînement pour entraîner un rotor (113), l'unité stationnaire (111) comprenant au moins une bobine (125) d'émission d'énergie, l'unité stationnaire (111) étant agencée pour recevoir un signal de commande en provenance de l'unité de commande (133) selon la revendication 8, comprenant des informations d'identification permettant d'identifier au moins une bobine (125) d'émission d'énergie, et des informations de quantité d'énergie comprenant la quantité d'énergie à transmettre, et sur la base des informations d'identification, sélectionner une ou plusieurs bobines (125) d'émission d'énergie de l'unité stationnaire (111) et régler un transfert d'énergie des une ou plusieurs bobines (125) d'émission d'énergie sur la base des informations de quantité d'énergie, l'unité stationnaire (111) étant agencée pour régler une quantité d'énergie de charge à un premier moment et une quantité d'énergie de repos à un deuxième moment, la quantité d'énergie de charge étant suffisante pour faire fonctionner un outil (137) agencé sur l'unité mobile (103), la quantité d'énergie au repos étant au maximum suffisante pour maintenir une alimentation en énergie d'une unité de communication de l'unité mobile (103), mais insuffisante pour faire exécuter une action supplémentaire à l'outil.

12. Unité stationnaire (111) selon la revendication 11, comprenant en outre une boucle de régulation au moyen de laquelle un signal de quantité d'énergie réelle est évalué et utilisé pour régler le transfert d'énergie.

13. Unité stationnaire (111) selon la revendication 11 ou 12, comprenant en outre un rail de guidage (105).

14. Système de transport linéaire (101) comprenant une unité de commande (133) selon la revendication 8, une unité stationnaire (111) selon l'une des revendications 11 à 13 et une unité mobile (103), l'unité mobile (103) comprenant une bobine (127) de réception d'énergie, une unité de communication et un outil (137) agencé sur celle-ci, un rotor (113) étant agencé sur l'unité mobile (103) et comprenant un ou plusieurs aimants (117), le stator (109) et le rotor (113) formant un entraînement linéaire.
